# EUROPEAN PATENT APPLICATION

(11) **EP 2 036 863 A1**
(43) Date of publication of application: **18.03.2009**
(21) Application number: 07742207.9
(22) Date of filing: 23.04.2007
(51) Int. Cl.: C02F 1/46

(54) **PROCESS FOR PRODUCING CONDUCTIVE SUBSTANCE WITH ION ADSORBED THEREON, METHOD OF REGULATING ION CONCENTRATION, AND ION SUPPLY SOURCE**

(30) Priority: 12.05.2006 JP 2006133584
(71) Applicant: TANAH PROCESS LTD., Osaka-shi, Osaka, 5450035 (JP)
(72) Inventor: TANAHASHI, Masakazu, Osaka-shi, Osaka 545-0035 (JP); TANAHASHI, Seiji, Osaka-shi, Osaka 545-0035 (JP)
(74) Representative: Hart-Davis, Jason
(86) International application number: PCT/JP2007/058772
(87) International publication number: WO 2007/132645

(57) **Abstract**

In the process of the present invention, first, voltage is applied between an electroconductive substance (11) capable of adsorbing ions and a counter electrode (12) in an aqueous solution (20) containing at least one type of ions (L) other than hydrogen ions and hydroxide ions, so that at least a part of the ions (L) contained in the aqueous solution (20) are allowed to be adsorbed on the electroconductive substance (11). Subsequently, the electroconductive substance (11) is removed from the aqueous solution (20) and then is washed.

## Description

### Technical Field

The present invention relates to a process for producing an electroconductive substance with ions adsorbed thereon, a method of regulating ion concentration, and an ion supply source.

### Background Art

Conventionally, a method using an ion-exchange resin and a method using a flow-through capacitor have been proposed as methods for changing the ion concentration in an aqueous solution.

When using a flow-through capacitor, ions are adsorbed on an electrode and thereby are removed. Apparatuses with flow-through capacitors used therein are disclosed in, for example, USP 5192432, USP 5196115, JP 5(1993)-258992 A, USP 5415768, USP 5620597, USP 5748437, JP 6(1994)-325983 A, and JP 2000-91169 A.

However, when only the concentration of specific ions is to be changed selectively or when only specific cations or anions are to be supplied selectively, a complicated apparatus that requires a power supply is necessary.

### Disclosure of Invention

In such situations, one of the objects of the present invention is to provide an ion supply source that can be used for a method of easily regulating the ion concentration in a liquid, a process for producing the same, and a method of regulating the ion concentration using the same.

In order to achieve the aforementioned object, a process of the present invention for producing an electroconductive substance with ions adsorbed thereon includes (i) applying voltage between an electroconductive substance (C1) capable of adsorbing ions and a counter electrode in a solution containing at least one type of ions (L) other than hydrogen ions and hydroxide ions to allow the electroconductive substance (C1) to adsorb at least a part of the ions (L) contained in the solution, and (ii) removing the electroconductive substance (C1) from the solution and washing it.

A method of the present invention for regulating the ion concentration in a liquid includes (I) immersing in the liquid an electroconductive substance (C1) on which either ions (L') selected from cations and anions are adsorbed, and (II) passing an electric current through the electroconductive substance (C1) so that charges with the same signs as those of the charges of the ions (L') flow into the electroconductive substance (C1), thereby releasing the ions (L') adsorbed on the electroconductive substance (C1) into the liquid.

An ion supply source of the present invention includes a container whose inside is isolated from the outside air, and an electroconductive substance enclosed in the container, wherein ions are adsorbed on the electroconductive substance.

According to the present invention, an ion supply source is obtained that can be used for a method of easily regulating the ion concentration in a liquid. Furthermore, the present invention makes it possible to produce an ion supply source of the present invention, i.e. an electroconductive substance with ions adsorbed thereon. Moreover, according to the method of the present invention using this ion supply source, it is possible to regulate easily the ion concentration in a liquid and to regulate the ion concentration even without any power supply.

### Brief Description of Drawings

FIGs. 1A and 1B are process diagrams showing an example of the process of the present invention for producing an electroconductive substance with ions adsorbed thereon; and FIG. 1C schematically shows an example of an electroconductive substance with ions adsorbed thereon.
FIGs. 2A and 2B are process diagrams showing another example of the process of the present invention for producing an electroconductive substance with ions adsorbed thereon; and FIG. 2C schematically shows another example of an electroconductive substance with ions adsorbed thereon.
FIGs. 3A and 3B are process diagrams showing another example of the process of the present invention for producing an electroconductive substance with ions adsorbed thereon.
FIGs. 4A and 4B are process diagrams showing an example of the method of the present invention for regulating the ion concentration in a liquid.
FIGs. 5A and 5B are process diagrams showing another example of the method of the present invention for regulating the ion concentration in a liquid.
FIGs. 6A and 6B are process diagrams showing another example of the method of the present invention for regulating the ion concentration in a liquid.
FIG. 7 is a diagram that schematically shows an electrode including an activated carbon fiber cloth, which was used in examples.

### Description of the Preferred Embodiments

Hereinafter, embodiments of the present invention are described. In the following description, the embodiments of the present invention are described using examples but the present invention is not limited to the examples described below. In the following description, specific values and materials may be indicated as examples. However, other values and materials may be used as long as the effects of the present invention are obtained. Furthermore, in the description made using drawings, the same parts are indicated with the identical numerals and the same description is not repeated in some cases.

### <Process for producing electroconductive substance with ions adsorbed thereon>

Hereinafter, a process of the present invention for producing an electroconductive substance with ions adsorbed thereon is described. In step (i) of this production process, voltage is applied between an electroconductive substance (C1) capable of adsorbing ions and a counter electrode in a solution containing at least one type of ions (L) other than hydrogen ions (H+) and hydroxide ions (OH-), and thereby the electroconductive substance (C1) is allowed to adsorb at least a part of the ions (L) in the solution. Thereafter, in step (ii), the electroconductive substance (C1) is removed from the solution and then is washed.

The solution used in step (i) contains at least one type of ions (L) in addition to hydrogen ions (H+) and hydroxide ions (OH-). The ions (L) may be at least one type of cations other than hydrogen ions. In this case, the solution contains the ions (L) and hydroxide ions. Furthermore, the ions (L) may be at least one type of anions other than hydroxide ions. In this case, the solution contains the ions (L) and hydrogen ions. Moreover, the ions (L) may contain at least one type of cations other than hydrogen ions and at least one type of anions other than hydroxide ions.

Examples of the ions (L), which are cations, include alkali metal ions, alkaline earth metal ions, transition metal ions, and N(C₂H₅)₄+. On the other hand, examples of the ions (L), which are anions, include halogen ions, SO₄²⁻, NO₃-, BF₄-, PF₄-, ClO₄-, and organic acid ions.

In this specification, unless otherwise specified, "cations" include ions (L) with positive charges and hydrogen ions, while "anions" include ions (L) with negative charges and hydroxide ions. Typical examples of the "cations" and "anions" are ions (L) with positive charges and ions (L) with negative charges, respectively.

The solvent of the solution used in step (i) is, for example, water but may be an organic solvent or a mixture of water and an organic solvent. A typical example of the solution is an aqueous solution containing salt dissolved therein. The salt dissolved therein is not particularly limited and examples thereof include sodium chloride, calcium chloride, and potassium sulfate. The concentration of the ions (L) contained in the solution is not particularly limited, but it is a concentration that allows an electroconductive substance (C1) to adsorb a desired amount of ions and that ensures the electroconductivity of the aqueous solution. Accordingly, when the ion concentration in the solution is insufficient, the ion concentration is increased by, for example, dissolving salt in the solution.

Conceivably, in step (i), charges are accumulated on the surface of an electroconductive substance (C1) and ions with charges with opposite signs to those of the accumulated charges are adsorbed on the surface of the electroconductive substance (C1) so as to be bonded to the accumulated charges. For instance, when positive charges are accumulated on the surface of the electroconductive substance (C1), anions (ions (L), which are anions, and/or hydroxide ions) are adsorbed thereon. When negative charges are accumulated on the surface of the electroconductive substance (C1), cations (ions (L), which are cations, and/or hydrogen ions) are adsorbed thereon. That is, these ions are attracted to the charges accumulated on the surface of the electroconductive substance by the Coulomb force and are adsorbed on the surface of the electroconductive substance. In other words, these ions are adsorbed on the surface of the electroconductive substance by the Coulomb force.

In step (i), voltage may be applied by a constant-voltage process or by a constant current process. Generally, the voltage to be applied and the electric current that flows thereby are a direct current voltage and direct current electricity but may be a pulse voltage and a pulse current, respectively, as long as the effects of the present invention can be obtained.

The electroconductive substance (C1) is a substance capable of adsorbing and releasing ions reversibly. Typically, the electroconductive substance (C1) is a substance that can accumulate charges and that can adsorb ions by the Coulomb force that is generated between the ions and accumulated charges. An example of the electroconductive substance (C1) that can be used is an electroconductive substance (C1) that forms an electric double layer on its surface by adsorbing ions in a solution.

Specifically, an electroconductive substance with a large specific surface area can be used for the electroconductive substance (C1) and, for example, carbon materials capable of adsorbing ions can be used. Among the carbon materials, an activated carbon can be used suitably since it has a large specific surface area. For instance, the electroconductive substance (C1) may include an electroconductive sheet formed by agglutinating granular activated carbon, an electroconductive sheet formed by agglutinating granular activated carbon and electroconductive carbon, or an activated carbon fiber cloth. Furthermore, it may include an activated carbon block obtained by compacting activated carbon particles. The specific surface area of the electroconductive substance (C1) with a large specific surface area may be, for example, in the range of 300 m²/g to 2500 m²/g.

The electroconductive substance (C1) may be a porous electroconductive substance. Furthermore, a material that is used for an electrode of a flow-through capacitor may be used for the electroconductive substance (C1). Typical examples of the electroconductive substance (C1) include a porous carbon material (for instance, activated carbon). The specific surface area of the electroconductive substance (C1) may be at least 900 m²/g. The upper limit of the specific surface area is not particularly limited and, for instance, may be 2500 m²/g or smaller. It also is possible to use an electroconductive substance with a smaller specific surface area, for example, an electroconductive substance (for instance, a carbon material such as activated carbon) with a specific surface area of at least 300 m²/g. In this specification, the term "specific surface area" denotes a value measured by the BET method using nitrogen gas.

Generally, since the use of the electroconductive substance (C1) alone results in high electrical resistance, a current collector is connected to the electroconductive substance (C1) as required. For example, an electroconductive material containing granular activated carbon may be fixed onto a metal foil, which serves as a current collector, using a binding agent. The electroconductive material may contain electroconductive carbon such as acetylene black. Furthermore, in the case of using a sheet-like electroconductive substance (for instance, an activated carbon fiber cloth), wiring for collecting current may be formed on the sheet. For example, a metal wiring can be used for the wiring, and a metal wiring coated with, for instance, noble metal may be used. The metal composing the wiring can be, for example, at least one selected from the group consisting of Al, Ti, Ta, and Nb. Furthermore, the metal with which the above-mentioned metal is coated can be at least one metal (including an alloy) selected from the group consisting ofAu, Pt, Pd, and Rh. A preferable example of the wiring is a metal wiring coated with Pt.

For the counter electrode, an electroconductive substance similar to the electroconductive substance (C1) capable of adsorbing ions may be used or an electrode that tends to electrolyze water may be used. For instance, an electrode with Pt present on the surface thereof can be used as the electrode that tends to electrolyze water. Specifically, an electrode whose metal surface has been coated with Pt may be used. For instance, an electrode formed by coating Ti or Nb with Pt may be used.

From another viewpoint, the actual surface area (i.e. the surface area measured by, for example, the BET method) of the counter electrode may be ten times or less (for instance, five times or less) the apparent surface area (the surface area of the outer shape) thereof. Examples of such a counter electrode include a common metal electrode and a graphite electrode. The actual surface area (i.e. the surface area measured by, for example, the BET method) of the electroconductive substance (C1) may be at least 10⁴ times the apparent surface area (the surface area of the outer shape) thereof.

When water is to be electrolyzed at a counter electrode, voltage is applied between the electroconductive substance (C1) and the counter electrode so that the electric potential of the counter electrode surface becomes an electric potential that allows water to be electrolyzed. On the other hand, when the counter electrode contains an electroconductive substance capable of adsorbing ions to allow ions to be adsorbed also thereon, it is preferable that voltage be applied between the electroconductive substance (C1) and the counter electrode so that the electric potential of the surface of the electroconductive substance becomes an electric potential that does not allow water to be electrolyzed.

In the production process of the present invention, voltage can be applied between the electroconductive substance (C1) and the counter electrode in step (i) so that the electroconductive substance (C1) serves as an anode, and thereby anions contained in the solution can be adsorbed on the electroconductive substance (C1). In this case, it is preferable that in step (i), voltage be applied between the electroconductive substance (C1) and the counter electrode in the range where the anions are not subjected to oxidative degradation on the surface of the electroconductive substance (C1).

Furthermore, in the production process of the present invention, voltage can be applied between the electroconductive substance (C1) and the counter electrode in step (i) so that the electroconductive substance (C1) serves as a cathode, and thereby cations contained in the solution can be adsorbed on the electroconductive substance (C1). In this case, it is preferable that in step (i), voltage be applied between the electroconductive substance (C1) and the counter electrode in the range where the cations are not subjected to reductive degradation on the surface of the electroconductive substance (C1) and in the range where the cations are not reduced to metal on the surface of the electroconductive substance (C1).

The washing step in step (ii) removes ions that have not been bonded to the electroconductive substance (C1) by the Coulomb force. Specifically, ions having charges with the same signs as those of the charges accumulated on the surface of the electroconductive substance (C1) are removed by the washing step.

When cations are adsorbed on the electroconductive substance (C1), it is preferable that in step (ii), the electroconductive substance (C1) be washed with a liquid substantially free of dissolved oxygen. The electroconductive substance (C1) on which cations are adsorbed is electrically neutral as a whole but the electric potential thereof is negative. Accordingly, when dissolved oxygen is present in the liquid for washing, the dissolved oxygen receives electrons on the surface of the electroconductive substance (C1) and thereby is reduced. As a result, the surface charges of the electroconductive substance (C1) are reduced and the cations adsorbed thereon are released into the washing liquid. In order to prevent such cation release, it is preferable that a washing liquid substantially free of dissolved oxygen be used. A preferable example of the washing liquid substantially free of dissolved oxygen is pure water bubbled with nitrogen gas.

The washing method employed in step (ii) is not particularly limited. It may be a method of washing the surface of the electroconductive substance with a washing liquid or a method of immersing the electroconductive substance in a washing liquid. The washing liquid to be used can be pure water, an organic solvent (for instance, alcohol), or a mixture thereof. In order to remove dissolved oxygen contained in pure water, pure water may be bubbled with nitrogen gas, for example. Furthermore, after washing with pure water, it may be washed with alcohol such as ethanol or isopropanol. Washing with alcohol allows the subsequent drying time to be shortened.

The production process of the present invention further may include a step of immersing the electroconductive substance (C1) washed in step (ii) in a liquid inside a container and then sealing the container. In this manner, the electroconductive substance (C1) with ions adsorbed thereon can be stored in the liquid. Preferably, the liquid used for storage also is substantially free of dissolved oxygen.

The production process of the present invention further may include a step of drying the electroconductive substance (C1) washed in step (ii). Preferably, drying is carried out in an atmosphere substantially free of oxygen gas. For instance, the electroconductive substance (C1) may be dried in an inert gas or under reduced pressure. Examples of the inert gas include nitrogen gas.

The production process of the present invention further may include a step of enclosing the dried electroconductive substance (C1), in a container whose inside is isolated from the outside air. In this manner, the electroconductive substance (C1) with ions adsorbed thereon can be stored. Preferably, the inside of the container is substantially free of oxygen gas. For instance, the inside of this container may be filled with an inert gas, the inside of the container may be deaerated, or an oxygen absorber may be placed inside the container.

The container is not limited as long as the inside thereof can be isolated from the outside air. It can be, for example, a container made of synthetic resin, such as a plastic bag or a plastic case. Preferably, this container has low oxygen permeability and low moisture permeability.

When the counter electrode contains an electroconductive substance (C2) capable of adsorbing ions, voltage may be applied between the electroconductive substance (C1) and the counter electrode in step (i) so that the electroconductive substance (C1) serves as an anode. This allows anions contained in the solution to be adsorbed on the electroconductive substance (C1) and cations contained in the solution to be adsorbed on the electroconductive substance (C2). In this case, the electroconductive substance (C1) with anions adsorbed thereon and the electroconductive substance (C2) with cations adsorbed thereon can be formed simultaneously. The anions and cations in the solution include at least one type of ions (L) other than hydrogen ions and hydroxide ions.

The electroconductive substance (C1) and the counter electrode (electroconductive substance (C2)) on which ions have been adsorbed in step (i) are removed and washed in step (ii). The washing method and the treatment after washing are as described above. That is, the methods of washing, drying, and storing described with respect to the electroconductive substance (C1) also can be applied to the electroconductive substance (C2).

The materials described with respect to the electroconductive substance (C1) can be used for the electroconductive substance (C2). The material used for the electroconductive substance (C1) may be completely the same as or may be different from that used for the electroconductive substance (C2).

### [Example of Step (i)]

An example of step (i) of the process for producing an electroconductive substance with ions adsorbed thereon is described below. In the following example, the description is made with respect to the case where the solution used is a sodium chloride aqueous solution, but an aqueous solution containing one or more types of other salts dissolved therein also may be used.

### [First Example]

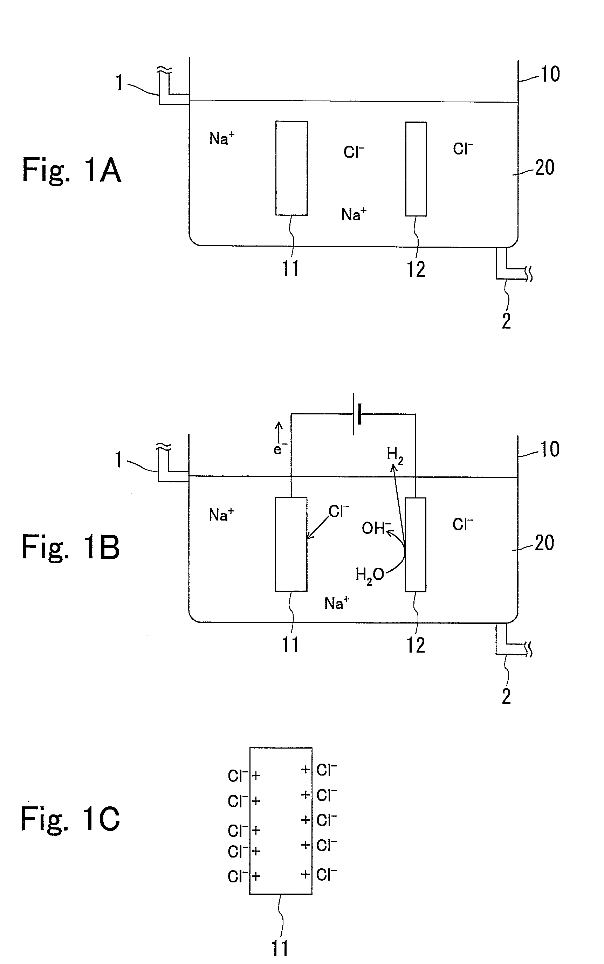

The steps of First Example are shown schematically in FIGs. 1A and 1B. In the drawings mentioned below, the chemical equivalent ratio is not taken into consideration for ease of understanding.

First, as shown in FIG. 1A, an electroconductive substance 11 capable of adsorbing ions and a counter electrode 12 are immersed in an aqueous solution 20 (hatching is omitted) containing cations (Na+) and anions (C1-) inside a bath 10. The bath 10 has an inlet 1 for introducing a liquid into the bath 10 and an outlet 2 for discharging a liquid from the bath 10.

As shown in FIG. 1B, DC voltage is applied between the electroconductive substance 11 and the counter electrode 12 so that the electroconductive substance 11 serves as an anode and the counter electrode 12 serves as a cathode. This allows the electroconductive substance 11 to adsorb anions (Cl-). On the other hand, water is decomposed on the surface of the counter electrode 12 and thereby hydroxide ions and hydrogen gas are generated. In this case, as shown in FIG. 1C, the surface of the electroconductive substance 11 has been charged with positive charges. The anions (Cl-) are then adsorbed on the surface of the electroconductive substance 11 so as to be bonded to the surface charges. Accordingly, it is conceivable that the anions (Cl-) adsorbed thereon remain adsorbed on the surface of the electroconductive substance 11 as long as the surface charges are not cancelled.

### [Second Example]

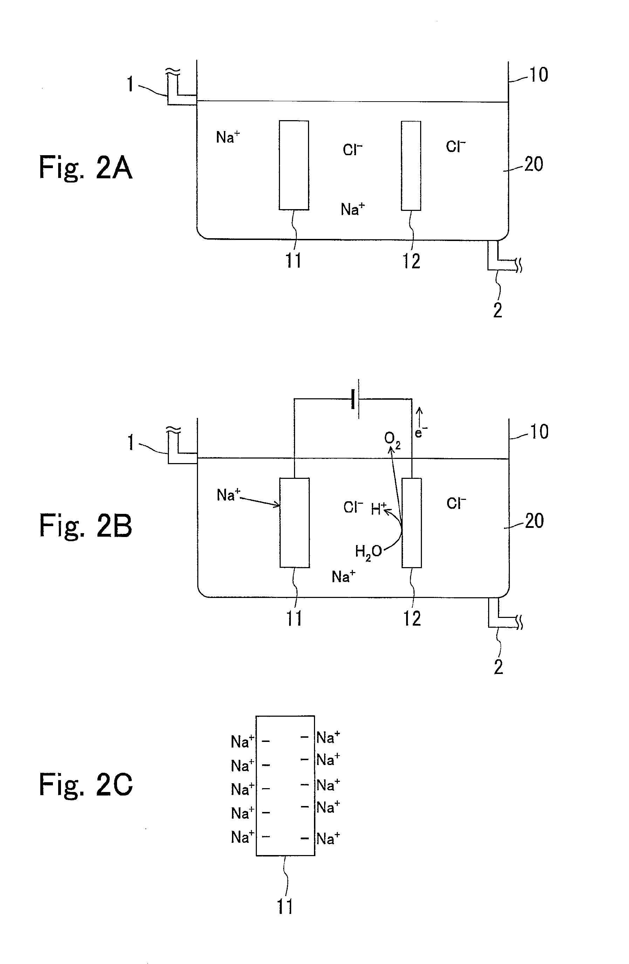

The steps of Second Example are shown schematically in FIGs. 2A and 2B. First, as shown in FIG. 2A, an electroconductive substance 11 capable of adsorbing ions and a counter electrode 12 are immersed in an aqueous solution 20 containing cations (Na+) and anions (Cl-) inside a bath 10.

As shown in FIG. 2B, DC voltage is applied between the electroconductive substance 11 and the counter electrode 12 so that the electroconductive substance 11 serves as a cathode and the counter electrode 12 serves as an anode. This allows the electroconductive substance 11 to adsorb cations (Na+). On the other hand, water is decomposed on the surface of the counter electrode 12 and thereby hydrogen ions and oxygen gas are generated. In this case, as shown in FIG. 2C, the surface of the electroconductive substance 11 has been charged with negative charges. The cations (Na+) are adsorbed on the surface of the electroconductive substance 11 so as to be bonded to the surface charges. Accordingly, it is conceivable that the cations (Na+) adsorbed thereon remain adsorbed on the surface of the electroconductive substance 11 as long as the negative charges of the surface of the electroconductive substance 11 are not cancelled.

### [Third Example]

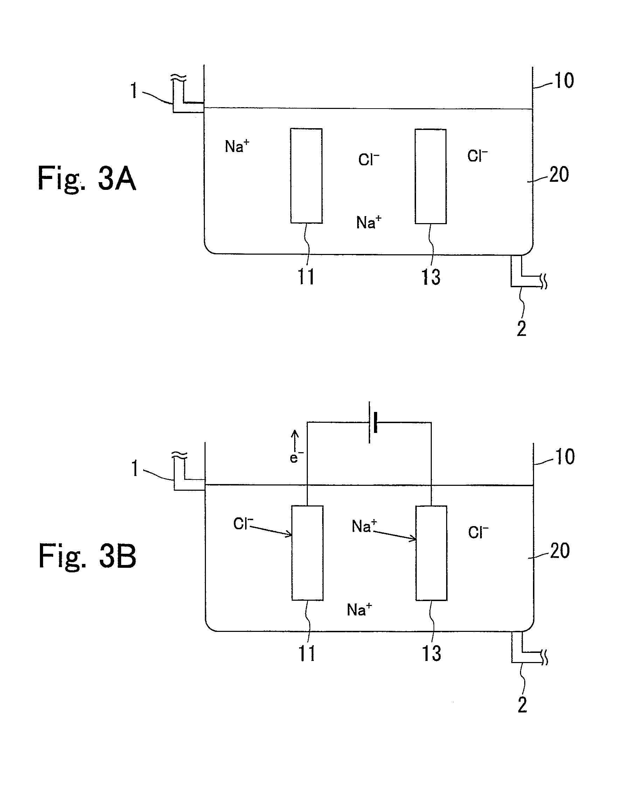

In Third Example, an electroconductive substance 13 capable of adsorbing ions is used as a counter electrode. The steps of Third Example are shown schematically in FIGs. 3A and 3B. As shown in FIG. 3A, an electroconductive substance 11 capable of adsorbing ions and the electroconductive substance 13 capable of adsorbing ions are immersed in an aqueous solution 20 containing cations (Na+) and anions (Cl-) inside a bath 10.

As shown in FIG. 3B, DC voltage is applied between the electroconductive substance 11 and the electroconductive substance 13 so that the electroconductive substance 11 serves as an anode and the electroconductive substance 13 serves as a cathode. This allows the electroconductive substance 11 to adsorb anions (Cl-) and the electroconductive substance 13 to adsorb cations (Na+). This method makes it possible to form simultaneously an electroconductive substance with anions adsorbed thereon and an electroconductive substance with cations adsorbed thereon.

### <Ion supply source>

Hereinafter, an ion supply source of the present invention is described. This ion supply source can be produced by the process of the present invention described above.

The ion supply source of the present invention includes a container whose inside is isolated from the outside air, and an electroconductive substance enclosed in the container. Ions are adsorbed on the electroconductive substance. The ions adsorbed thereon are cations or anions. When the ions adsorbed thereon are cations, a slight amount of anions that could not be removed by washing may be adsorbed on the electroconductive substance in some cases, but the ions adsorbed thereon are substantially cations alone. Similarly, when the ions adsorbed thereon are anions, a slight amount of cations that could not be removed by washing may be adsorbed on the electroconductive substance in some cases, but the ions adsorbed thereon are substantially anions alone. Since the ions adsorbed thereon are paired with the charges inside the electroconductive substance, they do not move unless the charges inside the electroconductive substance are released. The electroconductive substance, the ions adsorbed on the electroconductive substance, and the container were described above and therefore the same descriptions thereon are not repeated. From another viewpoint, the ion supply source of the present invention is an electroconductive substance with ions adsorbed thereon that has been taken out independently.

The above-mentioned container may be filled with an inert gas (for instance, nitrogen gas). Furthermore, a liquid may be enclosed in the container and the electroconductive substance with ions adsorbed thereon may be immersed in the liquid.

### <Method of regulating ion concentration of liquid>

Amethod of the present invention for regulating the ion concentration in a liquid is described below. In step (I) of this method, an electroconductive substance (C1) on which either ions (L') selected from cations and anions are adsorbed is immersed in a liquid.

The ions (L') are at least one type of ions selected from the group consisting of hydrogen ions, hydroxide ions, and ions (L) and are, for example, ions (L). The liquid used in step (I) is a liquid in which ions can be dissolved. This liquid is, for example, water, an aqueous solution, an organic solvent, or a mixture of water and an organic solvent. An electroconductive substance formed by the production process of the present invention or an electroconductive substance of the ion supply source of the present invention can be used for the electroconductive substance (C1) with ions (L') adsorbed thereon.

In step (II) following step (I), an electric current is passed through the electroconductive substance (C1) so that charges with the same signs as those of the charges of the ions (L') flow into the electroconductive substance (C1), and thereby the ions (L') adsorbed on the electroconductive substance (C1) are released into the liquid. That is, an electric current is passed through the electroconductive substance (C1) so that the surface charges of the electroconductive substance (C1) bonded to the ions (L') are reduced, and thereby the ions (L') adsorbed on the electroconductive substance (C1) are released into the liquid. For example, in the case where the ions (L') are cations and the surface charges of the electroconductive substance (C1) are negative charges, an electric current is passed through the electroconductive substance (C1) so as to reduce the negative charges. On the other hand, when the ions (L') are anions and the surface charges of the electroconductive substance (C1) are positive charges, an electric current is passed through the electroconductive substance (C1) so as to reduce the positive charges. Furthermore, an electric current may be passed through until the surface of the electroconductive substance (C1) is charged with charges with opposite signs to those of the original surface charges.

In an example of the method of passing an electric current through the electroconductive substance (C1), an electroconductive substance (C1) and a counter electrode are immersed in a liquid and an electric current then is passed between them. When the ions (L') adsorbed on the electroconductive substance (C1) are cations, the ions (L') can be released into the liquid by passing an electric current so that the electroconductive substance (C1) serves as an anode. Furthermore, when the ions (L') adsorbed on the electroconductive substance (C1) are anions, the ions (L') can be released into the liquid by passing an electric current so that the electroconductive substance (C1) serves as a cathode.

When anions are adsorbed on the electroconductive substance (C1), the electroconductive substance (C2) with cations adsorbed thereon and the electroconductive substance (C1) may be immersed in the liquid in step (I). That is, both the electroconductive substance (C1) with anions adsorbed thereon and the electroconductive substance (C2) with cations adsorbed thereon may be immersed in the liquid. In this case, at least one of the anions adsorbed on the electroconductive substance (C1) or the cations adsorbed on the electroconductive substance (C2) is at least one type of ions (L) other than hydrogen ions and hydroxide ions. In step (II), the electroconductive substance (C1) and the electroconductive substance (C2) may be short-circuited, so that the anions adsorbed on the electroconductive substance (C1) and the cations adsorbed on the electroconductive substance (C2) may be released into the liquid. When the electroconductive substance (C1) and the electroconductive substance (C2) are short-circuited, the positive charges present on the surface of the electroconductive substance (C1) and the negative charges present on the surface of the electroconductive substance (C2) cancel each other and are reduced. As a result, ions that have been bound to those surface charges are released into the liquid. Furthermore, in step (II) of this method, voltage may be applied between the electroconductive substance (C1) and the electroconductive substance (C2) to pass an electric current therebetween so that the charges present on the respective surfaces thereof are reduced (or reversed).

The same material as that described with respect to the electroconductive substance (C1) can be used for the electroconductive substance (C2). However, the electroconductive substance (C1) and the electroconductive substance (C2) may be identical to or may be different from each other.

An example of the method using an electroconductive substance (C0) that is in the state capable of adsorbing ions is described below.

Consideration is given to the case where the aforementioned liquid contains ions (L") that have charges with the same signs as those of the charges of the ions (L') and that are different from the ions (L'). In this case, the electroconductive substance (C0) that is in the state capable of adsorbing ions and the electroconductive substance (C1) with ions (L') adsorbed thereon may be immersed in the liquid in step (I). Thereafter, in step (II), an electric current may be passed between the electroconductive substance (C1) and the electroconductive substance (C0) so that charges with the same signs as those of the charges of the ions (L') flow into the electroconductive substance (C1) and charges with opposite signs to those of the charges of the ions (L') flow into the electroconductive substance (C0). This makes it possible to release the ions (L') adsorbed on the electroconductive substance (C1) into the liquid and to allow ions (L") to be adsorbed on the electroconductive substance (C0). That is, in step (II), an electric current may be passed between the electroconductive substance (C1) and the electroconductive substance (C0) so that the surface charges of the electroconductive substance (C1) bonded to the ions (L') are reduced and the surface of the electroconductive substance (C0) is charged with charges with signs opposite to those of the charges of the ions (L'). Step (II) increases the concentration of the ions (L') in the liquid and decreases that of the ions (L") in the liquid. This method makes it possible to change the concentration of cationic species or anionic species present in the liquid.

The same material as that described with respect to the electroconductive substance (C1) can be used for the electroconductive substance (C0). However, the electroconductive substance (C1) and the electroconductive substance (C0) may be identical to or may be different from each other. In the case of the method using the electroconductive substance (C0) that is in the state capable of adsorbing ions, it is preferable that an electroconductive substance (C0) that is substantially free of ions adsorbed thereon be used.

In the above-mentioned example of the method, a constant electric current may be passed between the electroconductive substance (C1) and the electroconductive substance (C0) in step (II). When a constant electric current is passed, it is possible to control the amount of ions to be released by changing the period of time for which the electric current is passed.

In the above-mentioned example of the method, the electroconductive substance (C1) and the electroconductive substance (C0) may be short-circuited in step (II). When both are short-circuited, an electric current is passed between the electroconductive substance (C1) and the electroconductive substance (C0) so that the surface charges of the electroconductive substance (C1) are reduced and the surface of the electroconductive substance (C0) is charged with charges with opposite signs to those of the charges of the ions (L').

In the above-mentioned example of the method, the concentration of the ionic species in the liquid can be varied widely as the amount of the ions that can be adsorbed on the electroconductive substance (C0) increases. Therefore, it is preferable that the total amount of charges of the ions (L') that can be adsorbed on the electroconductive substance (C0) be equal to or more than (preferably at least three times, for example, at least ten times) that of charges of the ions (L') adsorbed on the electroconductive substance (C1). In this context, supposing the electroconductive substance (C0) is allowed to adsorb the ions (L'), the expression of "the total amount of charges of the ions (L') that can be adsorbed on the electroconductive substance (C0)" denotes the difference between the amount of charges of the ions (L') adsorbed after the adsorption treatment and the amount of charges of the ions (L') adsorbed before the adsorption treatment. In the case of using the electroconductive substance (C0) with no ions adsorbed thereon, "the total amount of charges of the ions (L') that can be adsorbed on the electroconductive substance (C0)" is equal to the electric double layer capacitance of the electroconductive substance (C0).

As described above, the electroconductive substances (C1), (C2), and (C0) each may contain a carbon material capable of adsorbing ions. Furthermore, as described above, the carbon material may be activated carbon.

### [Examples of Step (I)]

Examples of the method of regulating the ion concentration of a liquid are described below. In the following examples, those in which sodium ions, potassium ions, chlorine ions, and sulfate ions are used are described, but other ions may be used.

### [First Example]

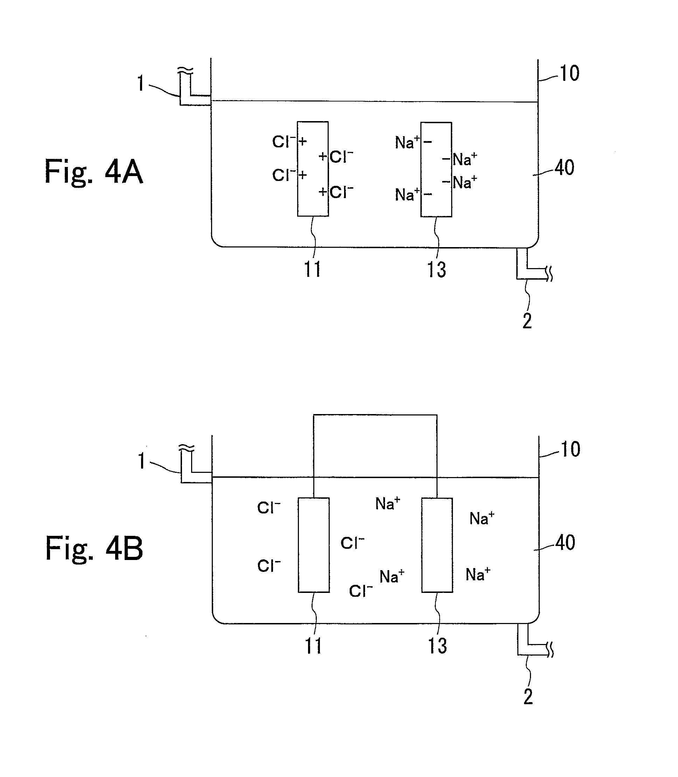

In First Example, as shown in FIG. 4A, an electroconductive substance 11 with anions (Cl-) adsorbed thereon and an electroconductive substance 13 with cations (Na+) adsorbed thereon are immersed in water 40 (hatching is omitted). Subsequently, as shown in FIG. 4B, the electroconductive substance 11 and the electroconductive substance 13 are short-circuited. By short-circuiting them, the surface charges of the electroconductive substances 11 and 13 cancel each other and are reduced. As a result, the ions adsorbed on the electroconductive substances are released into the water 40.

Voltage may be applied between the electroconductive substance 11 and the electroconductive substance 13 and thereby the surface charges of both may be reduced (or reversed). Furthermore, using a counter electrode 12 instead of the electroconductive substance 13, voltage may be applied between the electroconductive substance 11 and the counter electrode 12 to allow anions (Cl-) to be released. Moreover, using a counter electrode 12 instead of the electroconductive substance 11, voltage may be applied between the electroconductive substance 13 and the counter electrode 12 to allow cations (Na+) to be released.

### [Second Example]

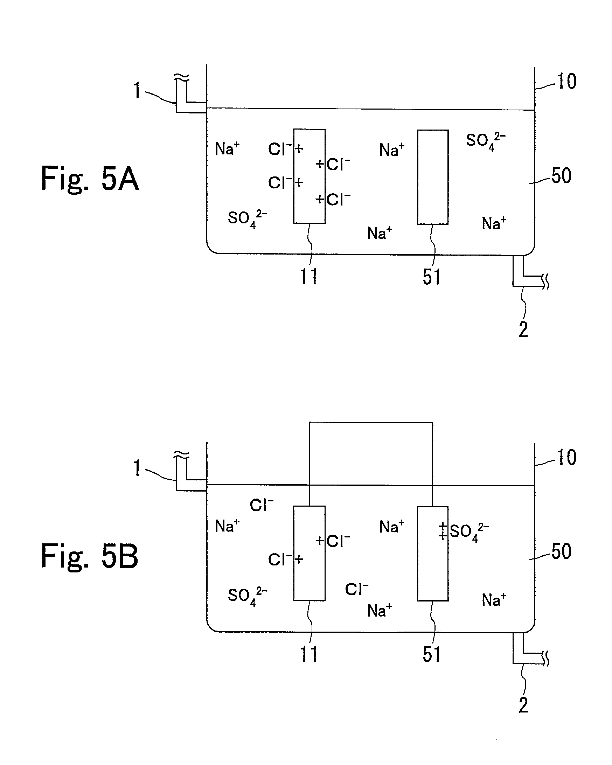

In Second Example, an electroconductive substance 51 that is in the state capable of adsorbing ions is used. First, as shown in FIG. 5A, an electroconductive substance 11 with anions (Cl-) adsorbed thereon and the electroconductive substance 51 with no ions adsorbed thereon are immersed in an aqueous solution 50 (hatching is omitted). The aqueous solution 50 contains anions other than hydroxide ions and chlorine ions. The following description is made with respect to the case where the aqueous solution 50 contains sulfate ions (SO₄²⁻), but the aqueous solution 50 may contain other anions and may contain a plurality of species of anions.

Next, an electric current is passed between the electroconductive substance 11 and the electroconductive substance 51 so that the surface charges (positive charges) of the electroconductive substance 11 are reduced and the surface of the electroconductive substance 51 is charged with positive charges. For instance, as shown in FIG. 5B, the electroconductive substance 11 and the electroconductive substance 51 may be short-circuited. Furthermore, voltage may be applied between both so that the electroconductive substance 11 serves as a cathode and the electroconductive substance 51 serves as an anode. This releases the anions (Cl-) adsorbed on the electroconductive substance 11 into the aqueous solution 50 and anions (mainly sulfate ions) contained in the aqueous solution 50 are adsorbed on the electroconductive substance 51. As a result, the chlorine ion concentration and the sulfate ion concentration in the aqueous solution 50 are changed. In this method, however, since other anions are adsorbed on the electroconductive substance 51 in an amount equivalent to that of the anions released from the electroconductive substance 11, the amount of charges of all the anions hardly changes between before and after voltage application.

### [Third Example]

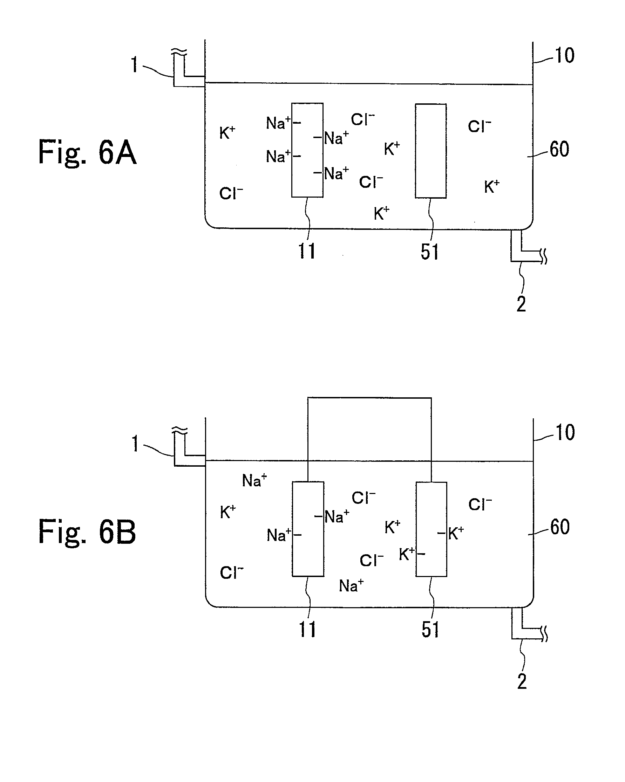

In Third Example, an electroconductive substance 51 that is in the state capable of adsorbing ions is used. First, as shown in FIG. 6A, an electroconductive substance 11 with cations (Na+) adsorbed thereon and the electroconductive substance 51 with no ions adsorbed thereon are immersed in an aqueous solution 60 (hatching is omitted). The aqueous solution 60 contains cations other than hydrogen ions and sodium ions. The following description is made with respect to the case where the aqueous solution 60 contains potassium ions (K+), but the aqueous solution 60 may contain other cations or may contain a plurality of species of cations.

Next, an electric current is passed between the electroconductive substance 11 and the electroconductive substance 51 so that the surface charges (negative charges) of the electroconductive substance 11 are reduced and the surface of the electroconductive substance 51 is charged with negative charges. For instance, as shown in FIG. 6B, the electroconductive substance 11 and the electroconductive substance 51 may be short-circuited. Alternatively, voltage may be applied between both electroconductive substances so that the electroconductive substance 11 serves as an anode and the electroconductive substance 51 serves as a cathode. This releases the cations (Na+) adsorbed on the electroconductive substance 11 into the aqueous solution 60 and cations (mainly potassium ions) contained in the aqueous solution 60 are adsorbed on the electroconductive substance 51. As a result, the sodium ion concentration and the potassium ion concentration in the aqueous solution 60 are changed. However, the amount of charges of all the cations hardly changes between before and after voltage application.

### <Apparatus for producing ion supply source>

An apparatus for producing an ion supply source includes a container in which a solution containing ions (L) is placed, a power supply for applying voltage to two electroconductive substances (or an electroconductive substance and a counter electrode) disposed inside the container, and a washing unit for washing electroconductive substances with ions adsorbed thereon. The container and the power supply are not particularly limited as long as the aforementioned method can be carried out, and they can be a commonly-used container and DC power supply. The washing unit for washing electroconductive substances may include, for example, a container to be filled with a washing liquid. Furthermore, the washing unit may include a squirting device (for instance, a nozzle and a pump) for spraying the washing liquid on electroconductive substances.

Moreover, the production apparatus may include a drying unit for drying electroconductive substances that have been washed. This drying unit may include, for example, a squirting device for spraying an inert gas on electroconductive substances and a container in which the pressure can be reduced. Furthermore, the production apparatus may include a unit for enclosing the electroconductive substances after washing or drying inside the container. For example, it may include a sealing unit for placing electroconductive substances in a bag made of synthetic resin and sealing it hermetically.

### [Examples]

Hereinafter, the present invention is described in further details using examples.

### [First Example]

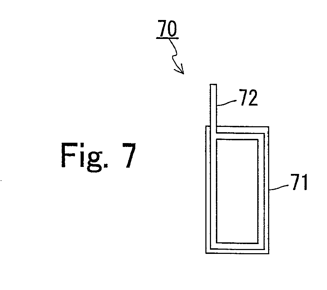

An activated carbon fiber cloth (manufactured by Nippon Kynol Inc.: ACC-5092-25 (with an area density of 100 to 130 g/m²)) with an area of 20 cm² was prepared. Subsequently, a current collector formed by coating Ti foil with Pt was attached to the activated carbon fiber cloth (electroconductive substance), and thereby an electrode was formed. In this manner, two electrodes were produced. FIG. 7 schematically shows an electrode 70 including an activated carbon fiber cloth 71 and a current collector 72 attached thereto.

Next, the two electrodes were immersed in a K₂SO₄ aqueous solution (concentration: 3 wt%). A voltage of 0.93 V was then applied between the electrodes, and thereby sulfate ions (SO₄²⁻), which were anions, were adsorbed on an anode while potassium ions (K+), which were cations, were adsorbed on a cathode.

Next, the two electrodes were removed from the aqueous solution and were washed well with water from which dissolved oxygen had been removed. The dissolved oxygen was removed by bubbling the water with small bubbles of nitrogen gas. Subsequently, the two electrodes were placed in different containers and were stored in water from which dissolved oxygen had been removed. Furthermore, two electrodes produced in the same manner were dried in nitrogen gas and were stored separately in dry nitrogen gas.

One week later, the two electrodes stored in the water were placed in pure water and the voltage between the two electrodes was measured. The voltage was 0.85 V, which was lower than expected. Conceivably, this is because charges were insufficient when ions were adsorbed, and thereby self-discharge occurred inside one activated carbon fiber cloth, which resulted in a decrease in voltage. Furthermore, the two electrodes stored in the dry nitrogen gas also were placed in pure water in the same manner, and voltage between the two electrodes was measured. The voltage was 0.81 V, which was slightly lower than that measured between the two electrodes stored in water.

The solution in which the activated carbon fiber cloth with potassium ions adsorbed thereon was placed was alkaline. Conceivably, this is because the dissolved oxygen was decomposed slightly. However, it was confirmed that most ions essentially were present in the adsorbed state. From another viewpoint, this phenomenon shows that an electrode with ions adsorbed thereon that is taken out as a single electrode and then is dried can be used as a charged single electrode. That is, it was confirmed that when a charged single electrode (electrode with ions adsorbed thereon) was stored in a dry condition and was placed in a solvent when used, it could be used as a capacitor.

### [Second Example]

An activated carbon fiber cloth (with an area of 30 cm² and a thickness of 0.5 mm) having an ability to adsorb iodine in an amount of approximately 1900 mg/g and having an area density of 120 g/m² was prepared as an electroconductive substance with a large specific surface area. Five such activated carbon fiber cloths were stacked together to form one electrode.

Next, the electrode formed of the activated carbon fiber cloths and a platinum electrode were placed in a 2N potassium sulfate aqueous solution, and an electric current of 100 mA was passed for two minutes, with the electrode formed of the activated carbon fiber cloths serving as an anode and the platinum electrode serving as a cathode. This allowed sulfate ions to be adsorbed on the activated carbon fiber cloths. The activated carbon fiber cloths with the sulfate ions adsorbed thereon were washed in pure water.

Furthermore, other activated carbon fiber cloths and another platinum electrode were placed in a 2N sodium chloride aqueous solution, and an electric current of 100 mA was passed for two minutes, with the activated carbon fiber cloths serving as a cathode and the platinum electrode serving as an anode. This allowed sodium ions to be adsorbed on the activated carbon fiber cloths. The activated carbon fiber cloths with the sodium ions adsorbed thereon were washed in pure water.

The activated carbon fiber cloths with sulfate ions adsorbed thereon and the activated carbon fiber cloths with sodium ions adsorbed thereon each were allowed to stand for one week in pure water from which dissolved oxygen had been removed. Thereafter, the two electrodes were short-circuited in pure water and were then taken out, and water was allowed to vaporize. In the places where water had vaporized, sodium sulfate crystals were generated.

In the same manner, cations or anions were allowed to be adsorbed on the activated carbon fiber cloths and thereby were taken out from, for example, a propylene carbonate solution of tetraethylammonium perchlorate, an aqueous ammonium sulfate solution, a calcium chloride aqueous solution, and an ethylene carbonate solution of lithium tetrafluoroborate. Thereafter, it was possible to produce various salt solutions using the activated carbon fiber cloths.

### [Third Example]

An activated carbon fiber cloth (with an area of 30 cm² and a thickness of 0.5 mm) having an amount of iodine adsorbed thereon of approximately 1900 mg/g and a weight of 120 g/m² was prepared as an electroconductive substance with a large specific surface area. Five such activated carbon fiber cloths were stacked together to form one electrode.

Next, the electrode formed of the activated carbon fiber cloths and a platinum electrode were placed in a 2N sodium sulfate aqueous solution, and an electric current of 100 mA was passed for two minutes, with the electrode formed of the activated carbon fiber cloths serving as a cathode and the platinum electrode serving as an anode. This allowed sodium ions to be adsorbed on the activated carbon fiber cloths. The five activated carbon fiber cloths with the sodium ions adsorbed thereon were washed in pure water and then were dried with a vacuum dryer. Subsequently, two activated carbon fiber cloths were placed in a container filled with dry nitrogen gas, and the other three were placed in an air atmosphere. In this manner, the five activated carbon fiber cloths were stored for one week.

Thereafter, the five activated carbon fiber cloths were immersed in pure water from which dissolved oxygen had been removed, and the change in pure water was checked.

The pure water in which the activated carbon fiber cloths were stored in the state in contact with air was alkaline. Although this reason is not clear, it is conceivable that while they were stored in the air, the activated carbon fiber cloths adsorbed moisture, and oxygen dissolved in the moisture received electrons from the activated carbon to become hydroxide ions.

On the other hand, water in which the activated carbon fiber cloths stored in nitrogen gas were immersed was slightly alkaline but hardly changed. Using these activated carbon fiber cloths and activated carbon fiber cloths with anions adsorbed thereon, it was possible to produce a solution of sodium salt as in First Example.

### Industrial Applicability

The present invention is applicable to an ion supply source that can be used for the method of easily regulating the ion concentration of a liquid, a process of producing the same, and a method of regulating the ion concentration using the same.

## Claims

1. A process for producing an electroconductive substance with ions adsorbed thereon, the process comprising:
(i) applying voltage between an electroconductive substance (C1) capable of adsorbing ions and a counter electrode in a solution containing at least one type of ions (L) other than hydrogen ions and hydroxide ions to allow the electroconductive substance (C1) to adsorb at least a part of the ions (L) contained in the solution; and
(ii) removing the electroconductive substance (C1) from the solution and washing it.

2. The production process according to claim 1, wherein in the step (i), voltage is applied between the electroconductive substance (C1) and the counter electrode so that the electroconductive substance (C1) serves as an anode, and thereby anions contained in the solution are adsorbed on the electroconductive substance (C1).

3. The production process according to claim 2, wherein in the step (i), voltage is applied between the electroconductive substance (C1) and the counter electrode in a range where the anions are not subjected to oxidative degradation on the surface of the electroconductive substance (C1).

4. The production process according to claim 1, wherein in the step (i), voltage is applied between the electroconductive substance (C1) and the counter electrode so that the electroconductive substance (C1) serves as a cathode, and thereby cations contained in the solution are adsorbed on the electroconductive substance (C1).

5. The production process according to claim 4, wherein in the step (i), voltage is applied between the electroconductive substance (C1) and the counter electrode in a range where the cations are not subjected to reductive degradation on the surface of the electroconductive substance (C1) and in a range where the cations are not reduced to metal on the surface of the electroconductive substance (C1).

6. The production process according to claim 4, wherein in the step (ii), the electroconductive substance (C1) is washed with a liquid substantially free of dissolved oxygen.

7. The production process according to claim 1, further comprising immersing the electroconductive substance (C1) washed in the step (ii) in a liquid inside a container and then sealing the container.

8. The production process according to claim 1, further comprising drying the electroconductive substance (C1) washed in the step (ii).

9. The production process according to claim 8, wherein the electroconductive substance (C1) is dried in an inert gas or under reduced pressure.

10. The production process according to claim 8, further comprising enclosing the electroconductive substance (C1) that has been dried, in a container whose inside is isolated from the outside air.

11. The production process according to claim 1, wherein the electroconductive substance (C1) contains a carbon material capable of adsorbing ions.

12. The production process according to claim 11, wherein the carbon material is activated carbon.

13. The production process according to claim 1, wherein the counter electrode comprises an electroconductive substance (C2) capable of adsorbing ions,
in the step (i), voltage is applied between the electroconductive substance (C1) and the counter electrode so that the electroconductive substance (C1) serves as an anode, and thereby anions contained in the solution are adsorbed on the electroconductive substance (C1) and cations contained in the solution are adsorbed on the electroconductive substance (C2), and
in the step (ii), the electroconductive substance (C1) and the counter electrode are removed from the solution and are then washed.

14. A method of regulating ion concentration in a liquid, the method comprising:
(I) immersing in the liquid an electroconductive substance (C1) on which either ions (L') selected from cations and anions are adsorbed, and
(II) passing an electric current through the electroconductive substance (C1) so that charges with the same signs as those of charges of the ions (L') flow into the electroconductive substance (C1), thereby releasing the ions (L') adsorbed on the electroconductive substance (C1) into the liquid.

15. The method of regulating ion concentration according to claim 14, wherein anions are adsorbed on the electroconductive substance (C1),
in the step (I), an electroconductive substance (C2) with cations adsorbed thereon and the electroconductive substance (C1) are immersed in the liquid, and
in the step (II), the electroconductive substance (C1) and the electroconductive substance (C2) are short-circuited, so that the anions adsorbed on the electroconductive substance (C1) and the cations adsorbed on the electroconductive substance (C2) are released into the liquid.

16. The method of regulating ion concentration according to claim 14, wherein the liquid contains ions (L") that have charges with the same signs as those of the charges of the ions (L') and that are different from the ions (L'),
in the step (I), an electroconductive substance (C0) that is in a state capable of adsorbing ions and the electroconductive substance (C1) are immersed in the liquid, and
in the step (II), an electric current is passed between the electroconductive substance (C1) and the electroconductive substance (C0) so that charges with the same signs as those of the charges of the ions (L') flow into the electroconductive substance (C1) and charges with opposite signs to those of the charges of the ions (L') flow into the electroconductive substance (C0) and thereby the ions (L') adsorbed on the electroconductive substance (C1) are released into the liquid and the ions (L") are allowed to be adsorbed on the electroconductive substance (C0).

17. The method of regulating ion concentration according to claim 16, wherein in the step (II), a constant electric current is passed between the electroconductive substance (C1) and the electroconductive substance (C0).

18. The method of regulating ion concentration according to claim 16, wherein in the step (II), the electroconductive substance (C1) and the electroconductive substance (C0) are short-circuited.

19. The method of regulating ion concentration according to claim 16, wherein the total amount of charges of the ions (L') that can be adsorbed on the electroconductive substance (C0) is equal to or more than that of charges of the ions (L') adsorbed on the electroconductive substance (C1).

20. The method of regulating ion concentration according to claim 14, wherein the electroconductive substance (C1) contains a carbon material capable of adsorbing ions.

21. The method of regulating ion concentration according to claim 20, wherein the carbon material is activated carbon.

22. An ion supply source, comprising a container whose inside is isolated from the outside air, and an electroconductive substance enclosed in the container,
wherein ions are adsorbed on the electroconductive substance.

23. The ion supply source according to claim 22, wherein the container is filled with an inert gas.

24. The ion supply source according to claim 22, wherein a liquid is enclosed in the container, and
the electroconductive substance is immersed in the liquid.
